# EUROPEAN PATENT APPLICATION

(11) **EP 1 683 620 A1**
(43) Date of publication of application: **26.07.2006**
(21) Application number: 05250289.5
(22) Date of filing: 20.01.2005
(51) Int. Cl.: B29C 45/26

(54) **An injection mould for an optical disc and a moulding method**

(71) Applicant: TDK Corporation, Tokyo 103-8272 (JP); TECHNOS CO., LTD.,, Yokohama-city Kanagawa-ken,223-0057 (JP)
(72) Inventor: Nakayama, Masatoshi, Chiba-ken, 285-0843 (JP); Takahashi, Akira c/o Technos Co. Ltd., Kanagawa-ken, 223-0057 (JP)
(74) Representative: Parnham, Kevin

(57) **Abstract**

To improve the precision of the mold for optical discs by utilizing a stamper with taper guides, the invention provides a mold for molding an optical disc including a fixed mold half (101) and a movable mold half (102) adapted to be moved relative to said fixed mold half, a first positioning member (115) mounted on the fixed mold half and a second positioning member (116) mounted on the movable mold half for positioning the movable mold half to the fixed mold half by mutually engaging the first and second positioning members, characterized in that one of said first and second positioning members is movable relative to the corresponding fixed mold half or movable mold half to form a molding cavity (110) and the stroke of said one of said first and second positioning members relative to the corresponding fixed or movable mold half is so set to maintain the mutual engagement of first and the second positioning members from the beginning of the opening after molding the optical disc to a predetermined open position of the fixed and movable mold halves where the molded optical disc can be released.

## Description

### [Technical field]

The present invention relates to a molding device for molding optical discs and a molding method using the molding device which are capable of improving the precision of the optical discs, more particularly, to a molding device using a stamper (master molding plate) and a method for molding optical discs using the same. In particular, the present invention relates to a mold for molding optical discs that improves the precision of the optical discs and a method for molding using the same.

### [Prior art]

Optical discs are generally produced using the injection molding method. A molding cavity is formed between opposing surfaces of a fixed mold half and a movable mold half, and a stamper having an information pattern on a surface in the form of pits or other irregularity according to information is mounted on a holding surface of one of the fixed and movable mold halves, a molten resin is injected into the cavity, and the mold is cooled to solidify the resin so that optical discs having an information pattern transferred from the stamper are produced. A central aperture or opening is formed by punching through the molded optical disc while the disc is still in fluid or semi-solid condition right after molding but before opening the molds.

With development of higher and higher density of information on optical discs, molding machines and molds became of higher performance, and at the same time demand for higher precision of discs has increased. Generally, DVD (especially DVD-R) is produced using a mold at high temperatures, and the higher the temperature, the larger is the linear expansion of metal, resulting in low precision of mold centering. The opening and closing of the mold also contributes to poor precision of mold centering. As a result, optical disc has a low quality, the optical disc has variation in thickness, and the stamper life becomes shorter. In addition, with a mold of the type wherein the movable mold half moves horizontally, the weight of the movable mold half aggravates the centering precision.
Although the centering precision is demanded in the order of micrometers, it is difficult to attain a centering with such high precision, due to the mechanical restrictions.

For solving the above-mentioned problem, conventional molding machines generally utilize a guide mechanism. For example, JP 2003-136540 A and the like disclose a mechanism in which, as shown in Fig. 7, opposing surfaces of a first mold half 1 and a second mold half 2 of a molding device for optical disc have: positioning members (taper guides) 19 and 48 having taper surfaces 21 and 50, respectively, that taper-wise engage together when the mold is in closed position; and guiding members having a plurality of guide pins (not shown) fixed to either of the fixed mold half or the movable mold half and having a plurality of guide pin receptor holes (not shown) which are formed in the corresponding positions on the other mold half to the positions of the respective guide pins and which slidably engage with the respective guide pins, with the slide direction being the direction of the opening and closing of the mold.

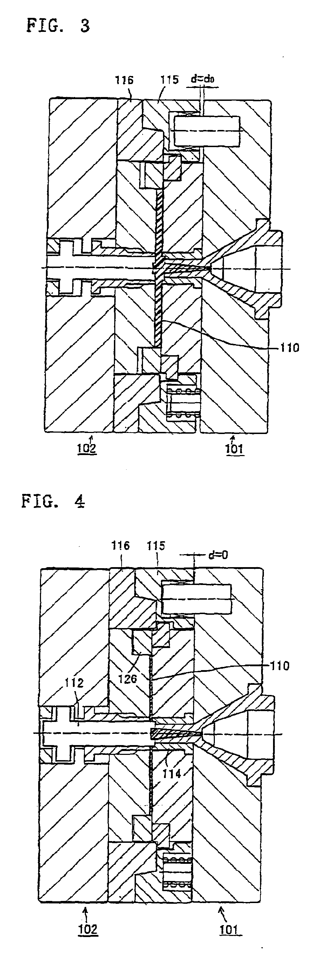

When molding an optical disc, a pair of mold halves 1, 2 are brought into a closed position with a stamper being held on a stamper-retaining surface of the molding cavity, and molding material is injected into the cavity formed between the molding blocks 17 and 46 of the mold halves. A punch 86 is actuated to punch through the molded disc while the disc is still in molten or half-solidified condition to form a central opening or aperture in the disc. After solidifying the molding material injected in the cavity, i.e. the optical disc, the movable mold half is moved to an opened position and then the resultant optical disc is removed from the mold. When the mold halves are in the closed position, the taper surfaces 21 and 50 of the positioning members (taper guides) 19 and 48 fixed to the mold halves are engaged or fit together, and thus the centers of both mold halves are aligned. On the other hand, when in the opened position, the above-mentioned document explains that, even though the positioning members of the both mold halves are apart, the centers of the mold halves are aligned by means of the guide pins and the guide pin receptor holes with which the respective guide pins slidably engage in the direction of opening and closing of the mold. Fig. 4 adopted the same numerals as in the above-mentioned document, and the direct reference can be made to the document for the detailed information.

The above-mentioned document also states that, even when a diamond-like carbonaceous layer (DLC layer) is applied to a stamper-holding surface of a mold, the mold could not have longer life since the DLC layer is peeled easily, and that a protective layer, such as alumina, should be added.

### [Patent document 1] JP 2003-136540 A

### [Disclosure of the invention]

### [Problem to be solved by the invention]

However, the study of the above-mentioned mechanism by the present inventor revealed that, with the use of one or both of the two different positioning means (guide pins and a positioning means utilizing complementary mating taper guide surfaces), centering was not sufficient and the resultant optical disc has variation in the thickness.

With the structure of the conventional mold, when the mold is in opened position, movable mold half deviates from the alignment due to a minute clearance between the guide pins and the guide pin receiving holes. As a result, the product (optical disc) has thickness variation. In addition, when a center hole is punched under the conditions that the fixed mold half and the movable mold half are misaligned from each other, some parts may be damaged because the male and female punches are brought into contact with each other.

Such misalignment or deviation is caused mainly due to thermal expansion and shrinkage of the mold halves caused necessarily by the fact that the mold halves are subjected to high temperatures during the molding operation and to the weight of the movable mold half, particularly, in horizontally arranged mold halves (namely, the movable mold half is translated in the horizontal direction).

The inventor has found that in the molding process using tapered surfaces, there were cases where the molding or gate cutting was effected while the taper surfaces of the taper guides are not entirely engaged with each other, resulting in the above-mentioned disadvantages. For example, when the molding cavity is opened during or subsequent to the gate cutting operation, the taper guide surfaces are disengaged immediately after the mold is opened and thus the molded optical disc is deformed due to the slight misalignment of the mold halves and the contact of the male and female punches.

Therefore, the object of the present invention is to provide a molding machine having taper guides provided with taper surfaces (or, as well as pin-type guides composed of guide pins and guide holes) which further improves the precision of the optical disc.

Another object of the present invention is to make it possible to use a long-life diamond-like carbonaceous layer (DLC layer) onto the stamper-holding surface of the mold, thereby improving mold life and stamper life.

### [Means to solve the problem]

Accordingly, the present invention solves the problem by providing a mold for molding an optical disc including a fixed mold half and a movable mold half adapted to be moved to and from said fixed mold half to close and open a molding cavity, a first positioning member mounted on the fixed mold half and a second positioning member mounted on the movable mold half for positioning the movable mold half with respect to the fixed mold half by mutually engaging the first and second positioning members, characterized in that one of said first and second positioning members is movably supported on the corresponding fixed mold half or movable mold half, and the stroke of said one of said first and second positioning members relative to the corresponding fixed or movable mold half is so set to maintain the mutual engagement of the first and the second positioning members from the beginning of the opening after molding the optical disc to a predetermined open position of the movable mold half where the molded optical disc can be released.

In a preferred mode, the means for movably supporting said one of said first and second positioning members on the corresponding fixed mold half or movable mold half is a sliding means interposed between said one of said first and second positioning members and the corresponding fixed or movable mold half, and the stroke of said one of said first and second positioning members relative to the corresponding fixed or movable mold half is set by a stopper member. Preferably, this sliding means may comprise a support pin a slide bearing supported by the pin, or a slide bearing means interposed between the one of the first and second positioning members (eg. taper guides) and the corresponding fixed or movable mold half.

In a further preferred mode, the engagement or mating surfaces of said first and second positioning means are complementary tapered surfaces.
In a yet further preferred mode, at least one second guide pin and at least one guide hole slidably receiving said second guide pin are used for guiding said movable mold half with respect to said fixed mold half.

More preferred embodiment, the present invention provides a mold for molding an optical disc including a fixed mold half, a movable mold half adapted to be moved to and from said fixed mold half to close and open a molding cavity, a pin type guide composed of a guide pin and a guide pin receptor hole, a first positioning member mounted on the fixed mold half and a second positioning member mounted on the movable mold half for positioning the movable mold half with respect to the fixed mold half by mutually engaging the first and second positioning members, characterized in that one of said first and second positioning members is movably supported on the corresponding fixed mold half or movable mold half, and the stroke of said one of said first and second positioning members relative to the corresponding fixed or movable mold half is so set to maintain the mutual engagement of the first and the second positioning members from the beginning of the opening after molding the optical disc to a predetermined open position of the movable mold half where the molded optical disc can be released. The means for movably supporting the one of the positioning members to the corresponding fixed or movable mold half may be either at least one sliding pin and at least one bearing for the sliding pin, or a sliding bearing inserted between the inner periphery of the one positioning member and the outer periphery of the corresponding fixed or movable mold half.

In a preferred mode of the present invention, a diamond-like carbonaceous layer is formed on the stamper-holding surface of the molding cavity of the mold. Preferably, an insulating layer is formed between the diamond-like carbonaceous layer and the stamper-holding surface.

For the diamond-like carbonaceous layer, a preferable composition is represented by the following formula:

CHₐ O_{b}N_{c}F_{d}BₑP_{f}

(where a=0.05-0.7, b=0-1, c=0-1, d=0-1, e=0-1 and f=0-1, in terms of atomic ratio).

The present invention also provides a method of molding optical discs including the following steps: a stamper having an information pattern to be transferred to the disc is mounted on a stamper-holding surface of the molding cavity of the any one of the above-mentioned mold for molding optical discs; and a molten raw resin is injected into the cavity.

Preferably, the fixed mold half is composed of a first support plate and a first molding block and the movable mold half is composed of a second support plate and a second molding block, and a molding cavity is formed in the opposing surfaces of the molding blocks.

### [Effect of the invention]

According to the present invention, a clearance-restricting or alignment or centering means is used in the mold for optical discs, in addition to the above-mentioned guide pins and/or taper guides, and preferably a diamond-like carbonaceous layer formed on the stamper-holding surface. As a result, the thickness variation of the resultant optical disc is suppressed and the misalignment of the mold halves or deflection form precise centering is decreased, thus the precision is improved. Also, the damage to the mold is decreased because the centering is improved. Moreover, the punching of the central aperture of the molded optical disc and opening or parting of the mold haves can be carried out in its still fluid or semi-solidified condition because the misalignment is prevented during the initial opening of the mold halves, thanking to the arrangement that the mutual engagement of the taper surfaces of the taper guides is maintained during this opening period. In addition, optionally, the injection cycle time can be further reduced because the injection of molted resin may be started prior to the complete closing of the movable and fixed mold halves

Also in the present invention, it is easy to form the diamond-like carbonaceous layer on the holding surface of the stamper, and therefore, it becomes possible not only to form optical discs with high precision, but also to remarkably improve mold life as well as stamper life, by suppressing the scratches caused by friction between the stamper and the mold surface. The problem in the above-mentioned document that the diamond-like carbonaceous layer is easily removed is solved in the present invention.

### [Best mode for carrying out the invention]

The mode for carrying out the invention will be described below. Since the methods for molding optical discs using taper guides and pin guides are known in the art, they are not explained in detail here. Reference can be made to the above mentioned JP 2000-136540 A and the like.

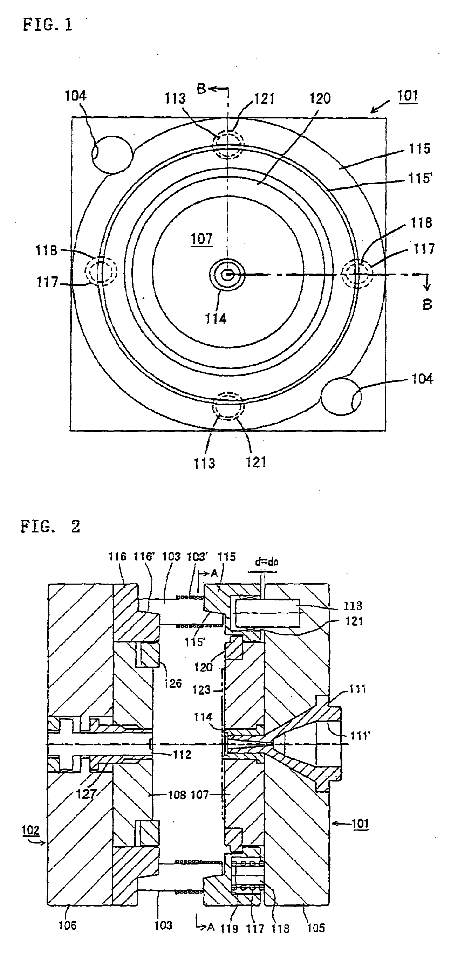

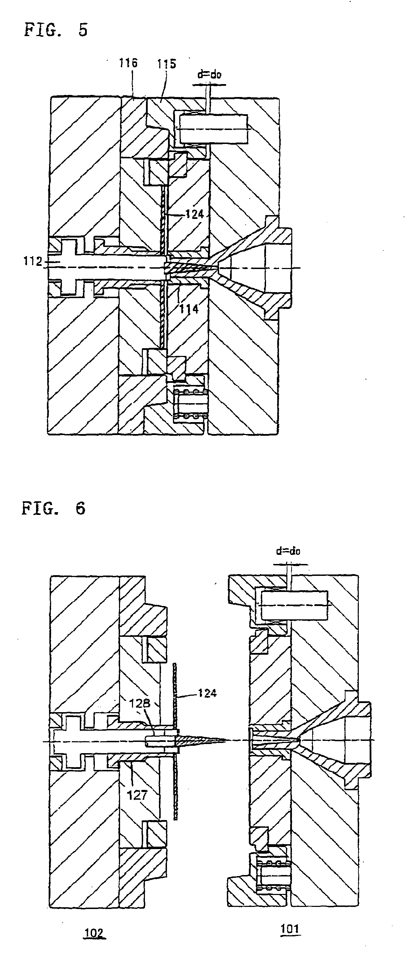

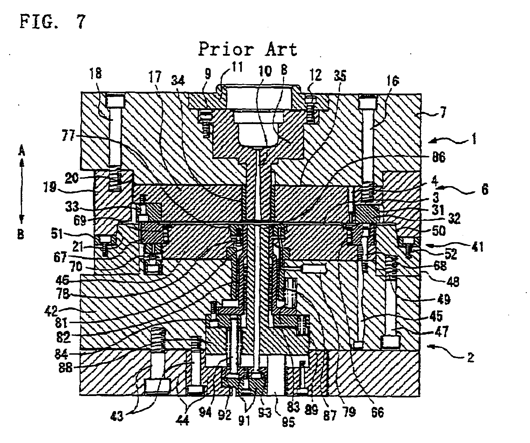

Figs. 1-6 show a preferred embodiment of the main part of the molding machine for the optical discs. Fig. 1 shows a front view of a mold as viewed from the line B-B of Fig. 2, Fig. 2 shows a cross sectional view taken along the line A-A in Fig. 1 with the mold in the initial open position. Fig. 3 shows a cross sectional view with the mold in almost closed position and injection of molten resin initiated. Fig. 4 is a cross sectional view with the mold in completely closed position and the cutting of the central opening having been completed. Fig. 6 is a cross sectional view with the mold in completely retracted position. Fig. 3 is shown as the injection having been started but the injection may be initiated after complete closing of the mold halves depending on the applications. The effects and advantages of the molding according to the present invention can be clearly understood from Fig. 5 and the step shown in Fig. 3 in this preferred embodiment is made possible according to the feature of the present invention.

A molding machine according to the present invention includes, as shown in Fig. 1 and 2, a fixed mold half 101, a movable mold half 102, and parallel guide pins 103 which guide relative motion of the movable mold half 102 relative to the fixed mold half 101. The guide pins 103 are omitted in Figs. 3-6 for the sake of brevity. In this embodiment, these guide pins are fixed to the movable mold half 102 and slidably fit in respective pin receptor holes 104 (in diagonally opposed positions as shown in Fig. 1) on the fixed mold half 101 at the corresponding positions, to guide opening and closing of the both mold halves. The guide pins 103 have each a race 103' having bearing balls which are in rolling contact with the wall of the receptor holes 104 to effect smooth guiding and centering of the movable mold half 102 with respect to the fixed mold half 101.

The fixed mold half 101 comprises a mounting plate 105 and a fixed-side molding block 107, which block forms a half of a molding cavity 110 (see Fig. 3). The fixed mold half 101 also has a gate member 111 with the path 111' for resin injection at the center of the gate member and a female punch member 114 for forming a central opening in a formed optical disc. On the other hand, the movable mold half 102 comprises a movable mounting plate 106 which is driven by a power source (not shown) and an integral movable-side molding block 108, which block forms the molding cavity 110 together with the fixed-side molding block 107 as the other half of the cavity. The movable mold half 102 takes a closed position or opened position relative to the fixed mold half 101.
The movable mold half 102 also has a male punch or cutting member 112 for punching the central hole at the center of the formed optical disc, which can make motion relative to the movable mold half 102. The male punch member 112 can be moved not only together with the movable mold half 102 but also independently from the movable mold half 102 by another power source (not shown). Also provided in the movable mold half 102 is a parting member 127 and gate parting member 128 which are independently driven by a third power source for parting the product optical disc 124 and residual gate resin.

In addition, the molding blocks 107 and 108 also contain other conventional means than those shown in the figure, which are necessary for this type of molding machine, such as cooling channels.

On the opposing surfaces of the mounting plates 105, 106 and around molding blocks 107 and 108, taper guides 115 and 116 are arranged respectively which annularly surround the molding cavity 110 and have taper surfaces 115' and 116' capable of fitting or engaging with each other, thereby precisely aligning the centers of the mold halves upon closing the mold. The taper guide 116 on the side of the movable mold half 102 is fixed to the molding block 108. The taper guide 115 on the side of the fixed mold half 101 is movably supported by the molding block 107 in such manner that the taper guide 115 can be moved back and forth by the maximum distance d=dₒ (d is movable distance, and dₒ is the maximum distance) in the axial direction of the mold. This is realized by guide pins 113 fixed to the mounting plate 105 and slidably supported by corresponding bearings 121 secured in recesses on the opposing surface of the taper guide 115. A stopper ring 120, which is engageable with the step portion of the taper guide 115, is fixed on the periphery of the molding block 107 of the fixed mold half 101 to limit the axial movement of the taper guide 115 within the distance d=dₒ (for example, about 1.5mm-3 mm). Compressed springs 117 (two in this embodiment) are retained by retainer pins 118 fixed to the mounting plate 105 and the forward ends of the springs abut against the bottom of retaining recesses 119 formed in the taper guide 116 to normally bias the taper guide 115 toward the taper guide 116.
Also, to maintain the molding cavity, a slide ring 126 biased with a compression spring (not shown) toward the fixed mold half 101 is mounted on the periphery of the cavity-forming portion of the molding block 108 of the movable mold half 102.

On the surface of the cavity forming surface of the fixed mold half 101, a changeable stamper 123 (shown by a chain line in Fig. 2) is mounted and clamped.

The maximum stroke or movable distance do of the taper guide 115 with respect to the fixed mold half 101. is set to a value that is necessary for precise centering (positioning or alignment) of the mold halves from a position where the precise centering of the mold halves becomes necessary prior to the complete closing of the mold halves to a position where the mold halves are slightly opened and the precise centering becomes unnecessary. Within such stroke or movable distance, even though a molten resin is injected into the molding cavity, punch members 112, 114 are actuated in a molten or semi-solidified condition of the molded disc, and the mold halves are advanced and retracted, the precise centering is maintained because the taper surfaces 115' and 116' of the taper guides 115 and 116 are maintained in their mutually fit or engaged condition within this distance. Accordingly, the deterioration of the centering by the thermal expansion and shrinkage and weight of the mold halves, as well as damage to the punches are prevented and high precision optical discs can be produced.

The operation of the mold will now be described. First, the mold is assumed to be in an open position as shown in Fig. 2 before initiation of the molding cycle. The stamper 123 having information pattern as inverse image in the form of pits is mounted in the cavity 110 in such manner that the information side is on the side of resin injection, and the back side of the stamper is held on the diamond-like carbonaceous layer or other abrasion-resistant layer formed on the wall surface of the cavity with the back side being in contact with the layer. In the open position in Fig. 2, the taper guide 115 of the fixed mold half 101 is biased with the springs 117 along the guide pins 118 from the fixed mold half 101 toward the movable mold half 102 by the distance do and held at this distance by the stopper ring 120.

When the power is turned on to start the molding cycle, the movable mold half 102 is pushed towards the fixed mold half 101, guided by the guide pins 103 and guide receptor holes 103 and then the taper surfaces 115' and 116' of the taper guides 115 and 116 are brought into fitting engagement with each other as shown in Fig. 3, forming a molding cavity 110. In this position a gap or distance do is still maintained. In this position, a molten resin is injected into the molding cavity 110 through the path 111' for resin injection of the gate member 111, thereby producing an optical disc.

Further advance of the movable mold half 102 to the complete closed position shown in Fig. 4 causes the taper guide 115 to move along the guide pins 113 against the compression spring 117 into engagement with the mounting plate 105 of the fixed mold half 101 (d=0), whereby the molted resin is caused to fill every corner of the molding cavity to form an optical disc 124. At this stage, the male punch 112 is actuated by a separate power source toward the female punch 114 to cut through the molten or semi-solid optical disc to form a central opening in the optical disc.

When the molding is finished and the mold is cooled to a certain temperature, the movable mold half 102 is caused to retract from the fixed mold half 101. During this separation, the molding block 108 of the movable mold half 102 retracts from the molding block 107 of the fixed mold half 101 to open the molding cavity. However, the taper guide 115 on the side of the fixed mold half 101 is pushed by the springs 117 and follows the taper guide 116 to the position shown in Fig. 5, while the taper surfaces 115' and 116' of the taper guides 115 and 116 are still kept in contact with each other and thus the centering of the mold is maintained. This stroke is the distance do allowed by the guide pin 113 and the bearing 123. The male punch 112 is caused to retract within this stroke. Thus, even after the opening of the mold begins, the precise centering of the mold is maintained within this stroke do and accordingly the variation of the thickness of the molded optical disc due to the deviation of the centering which was experienced in the conventional mold which included taper guides fixed to the fixed and movable mold halves is sufficiently prevented, whereby optical discs of an even thickness are produced and troubles such as damage to the mold are avoided.

The movable mold half 102 is moved back to the original position as shown in Fig. 6 where the product optical disc 124 is removed from the movable mold half 102 by actuating the parting members 127 and 128 driven by a third power source. Finally, the mold returns to the position as shown in Fig. 2 for the next injection molding cycle.
Incidentally, in the embodiment described above, the injection of a molten resin is started in the stage shown in Fig. 3 but if desired the injection may be initiated after the complete closure of the mold shown in Fig. 4.

It will be readily apparent for those skilled in the art that although, in the above-described embodiment, one of the taper guides was movably mounted on the fixed mold half, but the movable taper guide may be mounted on the movable mold half rather than the fixed mold half. Accordingly, it should be understood that the present invention includes such mode of embodiment.

Next, a modified embodiment will be described. As means for slidably supporting one of the taper guides on the corresponding movable or fixed mold half in place of the pins 113 and bearings 121 in the above embodiment, if the taper guide 115 is movably supported on the fixed mold half 101, an annular slide bearing may be inserted between the inner periphery of the taper guide 115 and the outer periphery of the molding block 107 or if the taper guide 115 is movably supported on the movable mold half 101, an annular slide bearing may be located in position between the inner periphery of the taper guide 116 and the outer periphery of the molding block 108. This construction provides effect similar to the first embodiment.

According to the present invention, in order to improve abrasion resistance and thus to improve the stamper life and mold life, it is preferred that a diamond-like carbonaceous layer is formed on the cavity surface on which the stamper 123 (usually Ni plate) of the mold is mounted. More preferably, in addition to this, an insulating layer can be formed as the base of the diamond-like carbonaceous layer, so as to heat the stamper to a predetermined temperature or more and to maintain the stamper of the mold at the predetermined temperature, in order to fill the information patterns on the stamper to even the corners thereof with molten resin upon injection and to attain precise transfer of the information pattern. With this structure, the productivity (shortening of the molding cycle time and increase in the number of shots per unit time) can be improved. With respect to the insulating layer, reference can be made to JP 2002-361689A, JP 2002-513691A, JP 2001-334534A and the like.

With respect to the diamond-like carbon (DLC) layer, reference can be made to, for example, Japanese Patent Application Kokai Nos. 62-145646 and 62-145647, and New Diamond Forum, Vol. 4 No. 4 (issued in October 25, 1988). As is described in the above-mentioned document (New Diamond Forum), Raman spectroscopic analysis showed that the DLC layer has a broad peak of Raman scattering spectrum at 1400 - 1700 cm⁻¹, which is different from diamond having a narrow peak at 1333 cm⁻¹, and graphite having a narrow peak at 1581 cm⁻¹, which in turn suggests that the DLC layer has distinctively different structure from the others. The broad peak observed in Raman spectroscopic analysis spectrum of the DLC layer is subject to change, due to the change in the elements included, other than carbon and hydrogen. The DLC layer is an amorphous thin layer mainly composed of carbon atoms and hydrogen atoms, which carbon atoms are randomly bonded via sp² and sp³ bonds.

The composition of the diamond-like carbonaceous layer to be used in the present invention mainly comprises carbon and hydrogen, and may include other additional components. The composition is preferably represented by the following formula:

CHₐO_{b}N_{c}F_{d}BₑP_{f}

where a = 0.05 - 0.7, b = 0 - 1, c = 0 - 1, d = 0 - 1, e = 0 - 1 and f = 0 - 1, in terms of atomic ratio.
The thickness of the diamond-like carbonaceous layer is preferably 0.03 - 5.0 µm.

The insulating layer to be used in the present invention is preferably composed of materials selected from: ceramics, such as alumina, silicon oxide, SiC; sintered materials, such as hard metal; glass; and heat-resistant synthetic resins, such as polyimide and polyamide-imide. These substances are selected on the basis of the affinity with the diamond-like carbonaceous layer. The thickness of the insulating layer is preferably 0.1 µm - 1.0 cm. When the surface of the insulating layer is not smooth, it is preferred that polishing be conducted prior to the formation of the diamond-like carbonaceous layer.

In the case when ceramic is used, flame spraying, ion plating, CVD method, pasting a plate or a film and sputtering can be used on the stamper-holding surface of the mold.
When glass is used, flame spraying, sputtering and pasting a plate or a film can be used.
In the case of heat-resistant synthetic resins, pasting a plate or a film, application of paint, filling of molten resin and the like can be used.

### (Formation of the diamond-like carbonaceous layer)

A diamond-like carbonaceous layer (hereinbelow, simply referred to as "DLC layer") can be formed by, for example, plasma CVD method, ionization deposition method and ECR plasma CVD method, and in addition, sputtering method can be used.

With respect to the plasma CVD method used for forming the DLC layer, reference can be made to, for example, Japanese Patent Application Kokai No. 4-41672. The plasma to be used in plasma CVD method may be either direct current or alternating current. However, alternating current is preferred. Alternating current can range from a few hertz to microwave. In addition, ECR plasma described in, for example, "Diamond thin-film technique" (published by Technology Center) can be used. Moreover, a bias voltage can be applied.

When the DLC layer is formed using plasma CVD method, the material gas is preferably selected from the following group of compounds.
Examples of the compounds containing C and H include hydrocarbons, such as methane, ethane, propane, butane, pentane, hexane, ethylene and propylene.
Examples of the compounds containing C+H+O include CH₃OH, C₂H₅OH, HCHO and CH₃COCH₃.

Example of the compounds containing C+H+N include ammonium cyanide, hydrogen cyanide, monomethylamine, dimethylamine, allylamine, aniline, diethylamine, acetonitrile, azoisobutane, diallylamine, ethylamine, MMH, DMH, triallylamine, trimethylamine, triethylamine and triphenylamine.

In addition, the above-mentioned compounds can be used in combination, or used together with O sources, ON sources, N sources, H sources, F sources, B sources, P sources and the like.

The flow rate of the above-mentioned material gas can be selected depending on the types of the material gas. In general, it is preferred that the operating pressure be 1 - 70 Pa and the input power be 10 W - 5 kW.

In the present invention, ionization deposition method and the like can be used for forming the DLC layer. With respect to ionization deposition method, reference can be made to, for example, Japanese Patent Application Kokai No. 59-174508, Japanese Patent Application Kokai No. 2-22012 and Japanese Patent Application Kokai No.10-202668. It should be noted that the methods and the devices are not limited to the disclosed ones, and other types of ionization deposition technique can be applied, if it is possible to accelerate the material ionization gas.

In ionization deposition method, the inside of the vacuum container is kept under the high-vacuum of approximately 10⁻⁴ Pa. This vacuum container is equipped with a filament therein which generates thermoelectrons when heated by the alternating-current power supply. This filament is sandwiched by an electrode couple, and voltage Vd is applied to the filament. In addition, an electromagnetic coil which generates a magnetic field for capturing ionized gas is placed in such manner that it surrounds the filament and the electrode couple. The material gas collides with the thermoelectrons from the filament, and generates positive thermolytic ions and electrons. This positive ion is accelerated by negative potential Va applied to the grid. By adjusting Vd, Va and the magnetic field of the coil, the composition and the quality of the layer can be altered. In addition, a bias voltage can be applied.

When the DLC layer is formed by ionization deposition method, the same material gas as in the case of plasma CVD method can be used. The flow rate of the material gas can be selected depending on the type of the gas. In general, the operating pressure is preferably 1 - 70 Pa.

It is also possible to form the DLC layer by sputtering method. In this case, gases such as O₂, N₂, NH₃, CH₄ and H₂ as reactive gas can be introduced, in addition to sputter gas, such as Ar and Kr. In addition, C may be used as a target, or mixed target containing C, N, O and the like or two or more targets may be used. Polymer can be used as a target. With the use of such targets, a radiofrequency power, an alternating-current power or a direct current power is applied, thereby sputtering the target; and the sputter is accumulated on the substrate, thereby forming a DLC layer. The radiofrequency sputter power is generally 50 W - 2 kW. In general, the operating pressure is preferably 10⁻³ - 0.1 Pa.

With the used of such targets, the radiofrequency power is applied, thereby sputtering the target, and the sputter is accumulated on the surface of the insulating layer fixedly formed on the mold, thereby forming a DLC layer. In this case also, a negative bias voltage is used for applying bias to the mold. The bias voltage is preferably direct current. Alternatively, self-bias can be applied instead of the bias voltage. The bias voltage is preferably-10 ~ -2000 V, more preferably -50 ~ -1000 V. The radiofrequency sputter power is generally 50 W - 2 kW. In general, the operating pressure is preferably 0.0013 - 0.13 Pa.

In the case that the insulating layer is formed by CVD method or sputtering method, it is desired that the surface layer be cleaned by vapor-phase etching using a gas, such as Ar and Kr. Minute irregularities formed on the surface by etching provide anchor effect, resulting in excellent cohesion.

### [Example]

The cavity surface of the mold holding the Ni stamper was subjected to mirror polishing, and a diamond-like carbonaceous layer having a thickness of 1.5 µm was formed thereon. It should be noted that the diamond-like carbonaceous layer was formed by a self-bias RF plasma CVD method, under the following conditions: material gas: C₂H₄ (0.017 Pa · m³ · s⁻¹), electric source: RF, operating pressure: 66.5 Pa, input power: 500 W, layer-forming rate: 100 nm/min. The composition of the layer was CH_{0.21}, and the resultant carbon layer was a diamond-like carbonaceous layer.

Optical discs were molded by injection molding with the machine shown in Fig. -1-6, using the above-mentioned mold and stamper, under the following conditions: the length of stroke or gap of the taper guide relative to the fixed mold half d=dₒ= 3.0mm. For comparison, optical discs were molded by injection molding using the conventional mold of the same construction but with fixed taper guides, namely, d=0 mm. The results are shown in Table 1.

**[Table 1]**

| | thickness variation (average value of 10 thousand discs (µm) | cycle time [relative value] | average value of deflection from the center (µm) |
|---|---|---|---|
| taper guide and guide pin | 14 | 0.82 | 19 |
| taper guide and guide pin, with d=3.0mm | 8 | 0.61 | 6 |

In Table 1, the term "thickness variation" means a difference in thickness between the inner rim and the outer rim, and the term "cycle time" means an interval between two shots for injection molding.
As is apparent from Table 1, when either one of the taper guides which is movable with respect to the fixed or movable mold half according to the present invention, thickness variation of the resultant disc is suppressed, and deflection of the centering is reduced, i.e. precision is improved. Finally, according to the present invention, the diamond-like carbonaceous layer can be easily formed on the holding surface of the stamper.

### [Brief description of the drawings]

[Fig. 1] The figure shows a view of a fixed mold half for optical disc according to the present invention, which taken along the line A-A of Fig. 2.
[Fig. 2] The figure shows a cross section of the mold of the present invention in an opened position, taken along the line B-B in Fig. 1.
[Fig. 3] The figure shows a cross section of the mold of the present invention in almost closed position and a molten resin is injected into the molding cavity.
[Fig. 4] The figure shows a cross section of the mold of the present invention in a entirely closed position.
[Fig. 5] The figure shows a cross section of the mold of the present invention wherein the mold is partly opened fro the entirely closed position.
[Fig. 6] The figure shows a cross section of the mold of the present invention in an opened position, wherein the molded optical disc is parted from the movable mold half.
[Fig. 7] The figure shows a cross section of the conventional mold for optical discs.

### [Explanation for the simbols]

- 101: fixed mold half
- 102: movable mold half
- 103: guide pin
- 103': bearing
- 104: pin receptor hole
- 105: mounting plate for fixed mold half
- 106: mounting plate for movable mold half
- 107: molding block of the fixed mold half
- 108: molding block of the movable mold half
- 110: molding cavity
- 111: gate member
- 112: male punch member
- 113: second guide pin
- 114: female punch member
- 115, 116: taper guides
- 115',116': taper surfaces
- 117: compression springs
- 118: retainer pins
- 119: spring holding portion
- 120: stopper ring
- 121: bearing
- 123: stamper
- 124: optical disc
- 126: slide ring
- 127: disc parting member
- 128: gate parting member

## Claims

1. A mold for molding an optical disc including a fixed mold half and a movable mold half adapted to be moved to and from said fixed mold half to close and open a molding cavity, a first positioning member mounted on the fixed mold half and a second positioning member mounted on the movable mold half for positioning the movable mold half with respect to the fixed mold half by mutually engaging the first and second positioning members,
**characterized in that** one of said first and second positioning members is movably supported on the corresponding fixed mold half or movable mold half, and the stroke of said one of said first and second positioning members relative to the corresponding fixed or movable mold half is so set to maintain the mutual engagement of the first and the second positioning members from the beginning of the opening after molding the optical disc to a predetermined open position of the movable mold half where the molded optical disc can be released.

2. A mold for molding optical disc according to Claim 1, wherein means for movably supporting said one of said first and second positioning members on the corresponding fixed mold half or movable mold half is a bearing interposed between said one of said first and second positioning members and the corresponding fixed or movable mold half, and the stroke of said one of said first and second positioning members relative to the corresponding fixed or movable mold half is set by a stopper member.

3. A mold for molding an optical disc according to Claim 1 or 2, wherein said engagement surfaces of said first and second positioning means are complementary tapered surfaces.

4. A molding device for molding an optical disc according to any one of Claim 1, 2 or 3, further comprising at least one guide pin and at least one guide hole slidably receiving said second guide pin for guiding said movable mold half with respect to said fixed mold half.

5. A mold for molding an optical disc according to any one of Claims 1-4, wherein a diamond-like carbonaceous layer is formed on a stamper-holding surface of the molding cavity.

6. A molding device for molding an optical disc according to Claim 5, wherein an insulating layer is formed between said diamond-like carbonaceous layer and said stamper-holding surface.

7. A mold for molding an optical disc according to Claim 5, wherein diamond-like carbonaceous layer has a composition represented by the following formula:
CHₐ O_{b} N_{c} F_{d} Bₑ P_{f}
(where a = 0.05 - 0.7, b = 0 - 1, c = 0 - 1, d = 0 - 1, e=0-1 and f=0-1, in terms of atomic ratio).

8. A method of molding optical discs including the following steps wherein a stamper having an information pattern to be transferred to the disc is mounted on a stamper-holding surface of the molding cavity of the mold for molding optical discs according to any one of Claims 1 - 7 and a molten raw resin is injected into the cavity.
